# DEMANDE DE BREVET EUROPEEN

(11) **EP 2 409 771 A2**
(43) Date de publication de la demande: **25.01.2012**
(21) Numéro de dépôt: 11305949.7
(22) Date de dépôt: 21.07.2011
(51) Int. Cl.: B03B 9/06

(54) **Procédé et dispositif de traitement de déchets, notamment de résidus de broyage légers**

(30) Priorité: 22.07.2010 FR 1056023
(71) Demandeur: Recypatents, 4832 Rodange (LU)
(72) Inventeur: Sertic, Franck, 4832 Rodange (LU)
(74) Mandataire: Ocvirk, Philippe

(57) **Abrégé**

Le traitement de déchets, notamment de résidus de broyage légers, comporte des étapes de séparation magnétique, de criblage, de séparation aéraulique et au moins un ensemble d'étapes de broyage et de criblage associés pour séparer en fonction de leur granulométrie des éléments de matière comportant des matériaux durs, tels que produits minéraux, métalliques et des matières plastiques, et des matériaux de type fibreux et obtenir différentes fractions granulométriques desdits éléments de matière, une étape de transport séparé de chacune desdites fractions d'éléments de matière, et au moins une étape de séparation par la forme menée séparément sur chaque fraction de produit issue dudit ensemble d'étapes de broyage et criblage associés, l'étape de séparation par la forme étant menée, pour chaque fraction granulométrique traitée indépendamment, de manière que l'étape de transport séparé conduise à une formation d'agglomérats de matières fibreuses contenues dans chaque fraction, et de manière à extraire ensuite dans chacune desdites fractions, les matières de dimensions les plus grandes et les moins denses telles que lesdits agglomérats de matière fibreuse.

## Description

La présente invention concerne un procédé et une installation de traitement industriel de déchets, comportant notamment des résidus de broyages légers, pour en faire un tri en vue d'un recyclage le plus complet possible ou de la meilleure valorisation énergétique possible.

Les déchets concernés sont des résidus de broyage industriels, et spécifiquement les résidus de broyage légers, encore appelés couramment « pauvres » ou « Shredder Light Fraction », qui sont typiquement les résidus aspirés dans les installations de broyage des macro-déchets après leur dépollution.

Certains procédés existants de tri des résidus de broyage permettent de séparer diverses catégories de déchets spécifiques, mais sans pouvoir traiter dans une même unité de temps et de lieu l'ensemble d'une masse de résidus de broyage mélangés.

D'autres procédés notamment thermiques visent à obtenir une valorisation énergétique maximale à des résidus de broyage, mais provoquent la perte partielle ou complète des propriétés utiles au recyclage des matières et/ou leur pollution, ce qui les rend impropres pour les filières classiques de recyclage.

On connaît déjà, par exemple par EP1332002, EP1333931 et EP1337341, des procédés portant sur le recyclage de déchets de broyage riches en résidus métalliques.

US2008105771 décrit un procédé de tri utilisant des séparateurs magnétiques et magnéto-dynamiques, des tambours de criblage, et des séparateurs densimétriques. US6086000 décrit un procédé visant à la récupération de déchets valorisables, par une succession d'étapes de broyage de plus en plus fin alternées avec des étapes de séparation magnétique des métaux, suivie par une étape de séparation des matières non métalliques. US2001048039 et US4139454 décrivent encore d'autres procédés notamment dédiés au traitement de résidus de broyage d'automobile.

De nombreux autres documents, tels que DE4217480, DE10334646, DE19915481, DE3501777, DE4244449, EP1020225, proposent aussi divers procédés de traitements de déchets et en particulier de résidus de broyage léger, et il y a déjà eu de nombreuses tentatives d'installations de traitement de déchets pour recycler un maximum de matière provenant des dits déchets, et en particulier de résidus de broyage légers.

Mais, de manière générale, ces tentatives se heurtent au problème de la grande variété de produits, tant en terme de nature de matériau que de dimensions des résidus à traiter, ce qui conduit, comme déjà indiqué plus haut, à ce que les installations soient spécialisées dans la récupération et le recyclage de certains produits seulement, avec le rejet et la destruction complète des autres produits, qui pourraient être valorisés, mais ne correspondent pas aux produits à recycler pour lesquels l'installation concernée à été prévue. Et, dans le cas où ces déchets non récupérés ne sont pas traités comme déchets ultimes, et que l'on souhaite encore les valoriser, ils doivent alors être transportés dans d'autres sites industriels adaptés à leur nature propre, ce qui occasionne des coûts d'autant plus importants si les opérations de transport se multiplient, avec dans chaque site seulement extraction des produits spécifiques au site considéré et renvoi des rebuts sur encore un autre site. Cette augmentation des coûts provoquée par des opérations de traitements menées successivement mais indépendamment, conduit généralement à ne réaliser qu'un nombre réduit de traitements de récupération des matières particulièrement recherchées par l'opérateur concerné, avec destruction totale des fractions non récupérées alors qu'elles contiennent cependant encore des produits qui seraient techniquement recyclables, mais dans des conditions économiques non-viables.

Le but visé par l'invention est donc d'assurer un tri le plus complet possible des matières valorisables contenues dans les résidus de broyage léger en effectuant le tri de l'ensemble d'une masse de résidus de broyage mélangés, et une séparation fine des différents matériaux récupérés, l'ensemble des opérations de tri étant réalisées dans un même lieu et sans reprises ni transports d'une installation industrielle dans une autre. L'invention vise à ce que, en préparant les matériaux extraits avec une qualité de séparation suffisante, ils puissent être le plus directement possible utilisés dans les filières de valorisation énergétique et matière, en réduisant le plus possible les déchets ultimes et l'élimination ou la destruction complète des déchets. On vise ainsi à réduire le taux de refus en dessous de 10 % en agissant sur la fraction généralement considérée ultime dans les sites de tri courants, et sur le taux de captage des matières recyclables.

Avec ces objectifs en vue, l'invention a pour objet un procédé de traitement de déchets, notamment des résidus de broyages légers, comportant des étapes de séparation et de criblage, ce procédé étant caractérisé en ce qu'il comprend également
- au moins un ensemble d'étapes de broyage et de criblage associés pour séparer en fonction de leur granulométrie des éléments de matière comportant des matériaux durs, tels que produits minéraux, métalliques et des matières plastiques, et des matériaux de type fibreux et obtenir différentes fractions granulométriques desdits éléments de matière,
- une étape de transport séparé de chacune desdites fractions d'éléments de matière, et
- au moins une étape de séparation par la forme menée séparément sur chaque fraction de produit issue dudit ensemble d'étapes de broyage et criblage associés, l'étape de séparation par la forme étant menée, pour chaque fraction granulométrique traitée indépendamment, de manière que l'étape de transport séparé conduise à une formation d'agglomérats de matières fibreuses contenues dans chaque fraction, et de manière à extraire ensuite dans chacune desdites fractions, les matières de dimensions les plus grandes et les moins denses telles que lesdits agglomérats de matière fibreuse.

L'invention repose sur l'idée de broyer assez finement les résidus de broyage légers apportés dans l'installation de traitement, pour permettre la dissociation ultérieure des différents types de matériaux durs qu'ils contiennent, mais en tenant compte de la présence concomitante, et en proportion relativement importante, dans lesdits résidus, de matières fibreuses ou similaires. Ces dernières, qui ne nuisent pas en elles-mêmes à la désagrégation mécanique des produits les plus durs lors de l'étape de broyage, perturbent cependant leur séparation du fait que ces matières fibreuses restent au moins partiellement liées aux matière plus dures et lourdes à l'issue du broyage et ont tendance à les retenir assemblées, et donc à en perturber la séparation. Le criblage effectué après le broyage permet déjà de séparer les résidus broyés mais contenant encore de la matière fibreuse non séparée, en différentes fractions granulométriques, telles que par exemple moins de 2 mm, de 2 à 8 mm, de 8 à 20 mm, et plus de 20 mm, ou encore moins de 10 mm, de 10 à 25 mm, de 25 à 50 mm, et plus de 50 mm, ces valeurs n'étant qu'indicatives et modifiables librement en fonction des résidus et des souhaits de l'utilisateur.

Il est dés maintenant précisé que par matière fibreuse on entend ici des matières se présentant sous forme de fibres, éventuellement groupées en formant par exemple des écheveaux plus ou moins irréguliers, mais qu'il ne s'agit pas de toutes matières, plus denses, contenant des fibres de manière générale, tels que des fibres tissées ou assemblées par collage, et en particulier il ne s'agit pas de matières se présentant sous forme de feuilles, telles que papier, cartons, ou similaires. Typiquement, les matières fibreuses considérées ici peuvent être des isolants fibreux, des fibres de caoutchouc, de bois, des fibres textiles naturelles ou artificielles, mais aussi les diverses matières susceptibles de se comporter comme des fibres après une désagrégation partielle au cours de l'étape de séparation par la forme ou en amont de celle-ci, telles que par exemple les mousses utilisées comme matière de rembourrage dans les voitures, les revêtements synthétiques souples, des tissus déchiquetés, etc.

De manière similaire, et par comparaison, les matériaux durs mentionnés ci-dessus comportent tous les matériaux métalliques, les minéraux, les matières plastiques qui ne se défibrent pas, et qui sont généralement susceptibles d'être coupés, écrasés, déchirés, réduits en grains ou en poudre, etc. lors des opérations de broyage.

Le procédé selon l'invention peut comporter diverses étapes de séparation magnétique, de criblage, de séparation aéraulique.

Ainsi, chaque fraction issue du criblage subséquent au broyage sera préférentiellement soumise à une séparation magnétique permettant d'évacuer les matériaux ferreux, ou au moins une bonne partie de ceux-ci, qui sont a priori assez facilement dissociables des fibreux après le broyage.

Cette séparation magnétique est menée de manière classique typiquement par des séparateurs dits « overband » placés en regard de transporteurs acheminant respectivement chaque fraction granulométrique desdits éléments de matière issus du criblage.

Une partie au moins de ce transport est effectuée sur des dispositifs de transport vibrants, de manière que les matières fibreuses desdits éléments de matière s'emmêlent et s'agglomèrent tout en se dissociant progressivement des matières dures prémentionnées, sur lesquelles les effets des vibrations sont clairement différenciés. De ces vibrations, il résulte donc une sorte de séparation entre lesdites matières fibreuses et lesdites matières dures, cette séparation s'accompagnant d'une agglomération progressive des matières fibreuses qui conduit à la formation d'agglomérats de fibres de faible densité et de dimensions et formes nettement différentes de celles des autres matières dites «dures». Un effet particulier des vibrations du transporteur vibrant joue sur les différences d'inertie des différentes matières transportées : d'une part les fibreux s'agglomèrent progressivement par un mouvement de roulement désordonné, les déformations en flexion des fibres souples favorisant l'enchevêtrement des fibres, mais les agglomérats restant cependant au contact de la surface du transporteur ; d'autre part, les vibrations du transporteur vibrant produisent un effet de propulsion sur les matières plus dures, qui « sautent » et ainsi se dégagent des agglomérats fibreux. Il en résulte que l'agglomération des fibres n'a pas tendance à emprisonner les matières solides.

Le phénomène qui vient d'être décrit et qui se produit lors du traitement réalisé sur les transporteurs vibrants, constitue la première partie de l'étape de séparation par la forme.

La seconde partie de cette étape de séparation par la forme est préférentiellement réalisée par utilisation d'un tambour à pointes entraîné en rotation selon son axe disposé horizontalement et sur la surface cylindrique duquel les produits provenant du transporteur vibrant sont déversés dans une zone située sensiblement au-delà, horizontalement, de son axe par rapport au sens du flux de matière, la rotation du tambour étant à contresens dudit flux de matière déversé. Le tambour à pointes comporte sur sa surface cylindrique une pluralité de pointes ou picots fins et de longueur prédéterminée, répartis de manière que les matières dures, de relativement forte densité et petite dimension passent entre lesdits picots lorsqu'ils tombent sur la surface du cylindre, éventuellement en rebondissant sur celle-ci, et en conséquence se trouvent évacués dans le sens du flux de matière, du côté du tambour opposé à l'arrivée de matière. Par contre, les agglomérats de fibreux se trouvent en quelque sorte piégés entre les picots lorsqu'ils tombent sur le tambour, et y sont au moins partiellement retenus du fait de leur relativement grande dimension. De ce fait, ils se trouvent entraînés par le tambour à contresens du flux de matière, et sont donc ainsi séparés des dites matières dures. Ces matières fibreuses sont évacuées du tambour, du côté opposé aux matières dures, aidées au besoin en cela par un système de peigne fixe entre les dents duquel les picots passent lors de la rotation du tambour.

On notera que cette séparation par la forme, permise par l'agglomération quasi exclusivement des matières fibreuses entre-elles, en en dissociant les matières non-fibreuses, plus dures, est d'autant plus efficace qu'elle est menée sur des matériaux ayant déjà subi globalement une séparation par dimensions. En effet, si le traitement effectué sur les transporteurs vibrants était réalisé sur un mélange de matériaux durs de granulométries plus diverses, mélangés et plus ou moins enrobés avec des éléments fibreux, l'entremêlement des fibres formant lesdits agglomérats se produirait aussi, mais, du fait de l'hétérogénéité dimensionnelle des matières d'origine, avec le risque que certaines matières dures, en particuliers de petites dimensions, restent piégées dans ces agglomérats. De plus, on comprendra aisément que des matériaux de granulométrie plus hétérogènes risqueraient d'être moins bien séparés par le tambour à pointes du fait de comportements plus diversifiés des matériaux lorsqu'ils tombent sur ledit tambour.

Le fait que, conformément à l'invention, la séparation par la forme est effectuée séparément sur des fractions granulométriques plus homogènes, évite ces problèmes et donne une meilleure efficacité au traitement effectué sur les transporteurs vibrants, ainsi qu'un comportement plus homogène des matériaux tombant sur les tambours à pointes. De plus, il est alors possible d'adapter les dimensions des tambours, par exemple sur la longueur des pointes et leur écartement, en fonction des granulométries de chaque fraction granulométrique.

Selon une disposition préférentielle, le broyage de l'ensemble d'étapes de broyage et de criblage associés est effectué dans un malaxeur broyeur à axe vertical, et encore plus préférentiellement, comporte un premier broyage suivi immédiatement d'un second broyage réalisé avec une énergie cinétique supérieure à celle du premier broyage. Ces étapes de broyages visent à casser les matières minérales, réduire les dimensions des matières métalliques par déchiquetage, compactage, par exemple enroulage de fils métalliques sur eux-mêmes, etc. La réalisation du broyage en deux sous-étapes successives et d'énergie croissante permet d'obtenir une granulométrie plus régulière et globalement plus fine, la deuxième sous étape traitant des matières de granulométrie déjà uniformisée par la première sous étape et étant donc plus efficace globalement sur l'ensemble de la matière, alors que, comparativement, une seule étape, même menée à énergie cinétique élevée, conduirait certes à réduire certains résidus à une granulométrie très faible, mais ceux-ci gênant et limitant alors le broyage des éléments plus gros restants.

Selon d'autres dispositions préférentielles :
- l'ensemble d'étapes de broyage et de criblage associés est précédé d'une séparation aéraulique,
- la dite séparation aéraulique est réalisée sur les résidus issus d'un précriblage permettant de séparer du flux de matière à traiter des fractions granulométriques de grande dimension, par exemple de plus de 70 mm, ou de très petites dimensions, par exemple inférieures à 2 mm.
- ce précriblage étant lui-même effectué sur les résidus de broyage léger issus d'un broyeur de forte capacité et soumis à une pré-séparation magnétique assurant une extraction des éléments métalliques ferreux déjà bien séparés des autres matières et d'assez grandes dimensions.

On notera que ces étapes de pré-séparation magnétique, de précriblage, et de séparation aérauliques peuvent être réalisées sur l'installation du broyeur de forte capacité.

Préférentiellement encore, selon d'autres dispositions complémentaires, les étapes suivantes sont réalisées après l'étape de séparation par la forme, sur chaque fraction granulométrique ou seulement sur certaines :
- séparation magnétodynamique pour séparer les métaux non ferreux, tels que aluminium par exemple,
- nouvelle séparation par la forme effectuée sur les fractions granulométriques de plus petite dimension, pour séparer à nouveaux les produit fibreux dégagés par l'évacuation des métalliques non ferreux,
- suivie d'une séparation balistique individualisée par fraction granulométrique, pour extraire par différence de densité les plus gros fibreux, ayant échappé à l'agglomération précitée, tels que morceaux de bois ou mousses diverses,
   ou
- séparation aéraulique complémentaire sur les fractions granulométriques les plus grosses, pour séparer aussi ces plus gros fibreux restant des matières plastiques en morceaux de 20 mm ou plus par exemple.
- séparation par flottation en milieu dense, réalisée sur les résidus de moins de 20 mm issus de la séparation balistique, pour séparer par exemple les plastiques des non ferreux subsistants tels que le cuivre.

Par les différentes étapes précitées, l'invention permet de réaliser un tri complet, ou au moins bien plus complet que ce qui était effectué antérieurement, pour recycler le maximum sinon la totalité de matières valorisables, telles que métaux ferreux, non-ferreux, plastiques et fibres, en une seule ligne de production fixe.

L'invention a aussi pour objet un procédé de traitement de déchets, notamment des résidus de broyages légers, comportant successivement les étapes suivantes :
- désintégration par un broyeur à chocs,
- séparation magnétique,
- premier criblage pour éliminer les résidus très fins et les gros résidus
- première séparation aéraulique pour extraction des pièces trop denses ou massives
- double broyage par passage successivement dans deux malaxeurs-broyeurs où la matière subit deux broyages successifs avec une énergie de broyage plus élevée dans le deuxième broyeur malaxeur que dans le premier,
- criblage en différentes factions granulométriques, chaque fraction étant ensuite traitée séparément par :
- séparation magnétique,
- séparation par la forme menée, pour chaque fraction granulométrique traitée indépendamment, de manière que l'étape de transport séparé conduise à agglomérer progressivement les matières fibreuses contenues dans chaque fraction et en séparer les autres matières, et de manière à extraire ensuite dans chacune desdites fractions, les matières de dimensions les plus grandes et les moins denses telles que lesdits agglomérats de matière fibreuse,
- les matériaux non-fibreux en aval de la séparation par la forme pouvant être soumis ensuite à d'autres étapes de séparation magnétique, séparation par la forme, séparation aéraulique, séparation en milieu dense.

L'invention a encore pour objet une installation de traitement de déchets, notamment de résidus de broyage légers, comportant divers moyens de séparation, cette installation étant caractérisée en ce qu'elle comprend aussi
- au moins un ensemble de broyeur-malaxeur et de cribles associés,
- des moyens de séparation par la forme comportant des moyens de transport vibrants séparés pour transporter séparément les différentes fractions granulométriques issues de l'ensemble de broyeur-malaxeur et de cribles associés.

Selon une disposition préférée, les moyens de séparation par la forme comportent aussi, associé à chaque moyen de transport vibrant, un tambour à pointes ou picots fins et longs espacés, répartis sur la surface du tambour, chaque tambour étant entraîné en rotation, selon son axe disposé horizontalement et étant situé en aval d'un des moyens de transport vibrant de manière que les produits provenant du transporteur vibrant soient déversés dans une zone du tambour située sensiblement au delà, horizontalement, de son axe par rapport au sens du flux de matière, et la rotation du tambour étant à contresens dudit flux de matière déversé.

Préférentiellement, l'ensemble de malaxeur-broyeur et de cribles associés comprend deux malaxeur-broyeur à axe vertical disposés successivement dans le sens du flux de résidus,le deuxième malaxeur-broyeur étant à énergie cinétique supérieure à celle du premier.

Préférentiellement aussi, l'installation comprend, en premier poste de traitement, un broyeur à chocs pour effectuer une désintégration des matières.

Selon des dispositions complémentaires, l'installation comprend aussi des moyens de séparation magnétique, de criblage, de séparation aéraulique et notamment :
- un séparateur aéraulique situé en amont de l'ensemble de malaxeur-broyeur et de cribles associés,
- un pré-crible en amont du séparateur aéraulique,
- un séparateur magnétique en amont du pré-crible.

Le séparateur magnétique, le précrible et le séparateur aéraulique peuvent aussi être situés sur une installation de broyage à forte capacité, comportant par exemple un broyeur à chocs tel que mentionné ci-dessus, d'où sont issus les résidus de broyage légers traités par les autres moyens de l'installation selon l'invention.

Selon d'autres dispositions complémentaires, l'installation comprend aussi en aval de chacun ou de certains des séparateurs par la forme, un ou plusieurs des éléments suivantes :
- un séparateur magnétodynamique
- un séparateur par la forme secondaire,
- un séparateur balistique,
- un séparateur aéraulique secondaire,
- un séparateur par flottation en milieu dense.

Les déchets concernés par l'invention sont les résidus de broyage industriels, et spécifiquement les résidus de broyage légers aspirés dans les installations de broyage des macro-déchets après leur dépollution. Le but atteint est d'éviter aux déchets l'élimination et la destruction en les préparant avec une qualité suffisante pour les filières de valorisation énergétique et matière, tout en réduisant le plus possible les déchets ultimes.

Le traitement appliqué à cette matière avec ou sans séparation préalable permet d'obtenir des flux de matière affinés d'une qualité permettant soit leur valorisation énergétique, soit leur recyclage sans destruction de leurs propriétés utiles, tout en limitant au maximum les déchets ultimes.

Le procédé objet de l'intervention parvient par une suite d'étapes de traitement de granulation, de séparations magnétiques et gravimétriques à séparer les matières sans en altérer les propriétés utiles et sans empêcher un possible sur-tri réalisé sur les sites de recyclage. Le principal avantage du procédé constitue à travailler sur la fraction ultra-fine aujourd'hui considérés comme un refus dans les autres procédés de tri, afin d'en sortir les dernières ferrailles, les oxydes de fers, les fragments les plus fins d'aluminium et de réaliser une fraction organique propre constituées en majorité de bois et de fibres organiques destinée à être transformée en combustible de substitution.

D'autres caractéristiques et avantages apparaîtront dans la description qui va être faite d'un exemple de réalisation d'une installation de traitement de résidus de broyage légers conforme à l'invention, et de sa mise en oeuvre.

On se reportera aux dessins annexés dans lesquels :

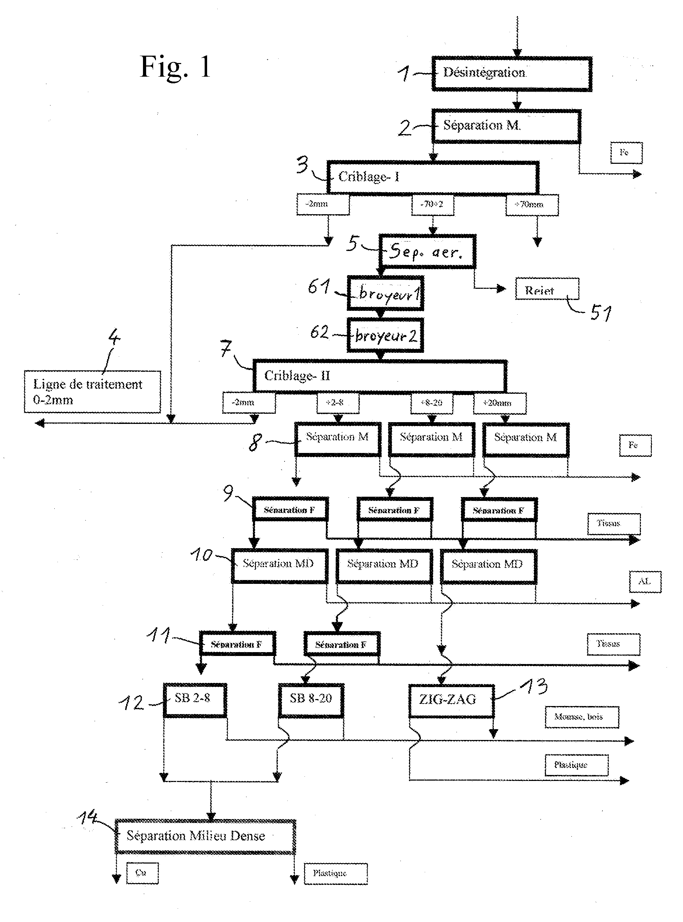

- la figure 1 est un schéma fonctionnel de l'installation,
- la figure 2 est une représentation schématique d'un séparateur par la forme associé à un transporteur vibrant, adapté pour l'installation de la figure 1.

Dans une première phase, les déchets bruts, tels que par exemple issus d'unité de broyage de voitures automobiles, passent dans un premier broyeur 1 où il subissent un pré-broyage pour réaliser une fluidisation de la masse des déchets bruts reçus, une homogénéisation de leur granulométrie et de leur consistance et une augmentation de leur surface totale de contact et de discrimination. Ce pré-broyage est en fait plus une opération préliminaire de désintégration que de broyage, cette désintégration visant essentiellement à séparer les éléments assemblés d'un sous-ensemble formé de matières différentes assemblées ou emmêlées, alors que généralement on considère qu'une opération de broyage consiste à générer des broyats de dimension granulométrique relativement uniforme, ou au mois dans une certaine fourchette de granulométrie, en détruisant autant des assemblages de plusieurs éléments que des morceaux de même nature.

Cette désintégration, dont le rôle est particulièrement important pour la suite du processus, est préférentiellement réalisée par un broyeur à chocs.

Les matières ainsi désintégrées sont extraites par un transporteur à bande équipé d'un séparateur magnétique 2, typiquement de type dit « overband », qui assure une première extraction des matières ferreuses.

Ensuite un premier criblage 3 assure une séparation grossière entre
- les résidus très fins, typiquement moins de 2mm, qui peuvent être directement dirigés ou transportés vers une ligne de traitement spécialisée 4, qui ne fait pas partie de l'installation selon l'invention.
- les gros résidus, typiquement supérieurs à 70 mm, qui peuvent eux aussi être traités séparément, ou renvoyé vers le broyage initial,
- les résidus de dimensions intermédiaires, soit de l'ordre de 2 à 70 mm, passent dans un séparateur aéraulique principal 5, qui assure une extraction des pièces trop denses ou massives 51 , qui peuvent être réintroduites dans le broyeur 1 pour subir à nouveau la phase de pré-broyage. Cette première phase de tri aéraulique permet de préserver les malaxeurs-broyeurs des pièces trop denses ou trop massives qui pourraient les endommager.

Les résidus de broyage légers issus du séparateur aéraulique 51 subissent ensuite un double broyage par passage successivement dans deux malaxeurs-broyeurs à axe vertical 61, 62, ou des broyeurs à axe vertical, où la matière subit deux broyages successifs avec une énergie de broyage plus élevée dans le deuxième broyeur malaxeur que dans le premier.

Les résidus sont ensuite triés sur un deuxième crible 7 assurant typiquement une séparation de moins de 2mm, de 2 à 8 mm, de 8 à 20 mm et plus de 20 mm. Les déchets de moins de 2 m sont par exemple dirigés vers la ligne de traitement spécialisée 4. Chaque fraction granulométrique est ensuite traitée séparément, de sorte que chaque étape de séparation ultérieure est ainsi réalisée sur un flux de matière ayant une granulométrie homogène, afin d'augmenter la performance des opérations de classification aéro-densimétrique ultérieures.

Suite à ce tri, chaque fraction est soumise à une nouvelle séparation magnétique, par exemple par des séparateurs de type « overband » 8, assurant l'extraction des résidus ferreux dissociés des autres matières lors du broyage précédent. Le tri est réalisé par la mise en série de machines de séparation qui extraient du flux de matières les métaux ferreux en les attirant dans un champ magnétique situé au-dessus ou au dessous de la bande transporteuse véhiculant la matière.

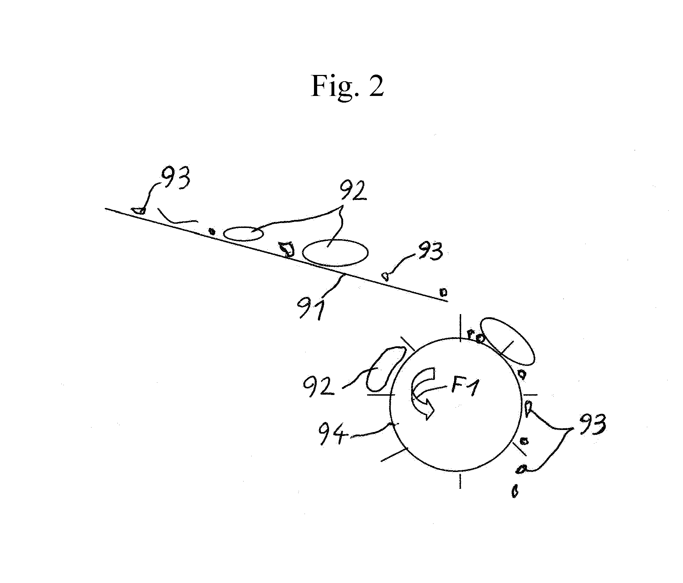

Chaque fraction granulométrique subit ensuite une séparation dite séparation par la forme 9, illustrée par le schéma de la figure 2.

Lors de cette opération, la matière est déplacée sur des transporteurs vibrants 91 qui ont notamment pour effet, comme indiqué précédemment, d'agglomérer progressivement les matières fibreuses 92 et d'en séparer les autres matières telles que petits éléments 93 métalliques, plastiques etc. A titre d'exemple, un tel transporteur vibrant est constitué par une plaque métallique, sur laquelle sont fixés des moteurs à balourds. La plaque a une longueur, orientée dans le sens de déplacement des matières, de l'ordre de 2 m, et une inclinaison positive d'environ 15°. La fréquence des vibrations générées par la rotation des moteurs à balourd est typiquement de 25Hz. Ces valeurs numériques ne sont données qu'à titre d'exemple non limitatif de l'invention ; les caractéristiques des transporteurs vibrants pourront notamment être adaptées en fonction des paramètres d'exploitation de l'installation, et aussi en fonction de résultats expérimentaux obtenus lors d'essais sur les produits à traiter.

Arrivée à l'extrémité du transporteur, la matière tombe en chute libre sur un tambour 94, ou rouleau, d'axe horizontal et entraîné en rotation dans le sens de la flèche F1, c'est-à-dire à contresens du flux des matières arrivant du transporteur. La surface du tambour 94 est pourvue de picots, ou tiges fines et pointues, dont la longueur est déterminée de manière à être légèrement supérieure à la distance entre la surface du tambour, et un centre de gravité moyen des agglomérats 92 de matière fibreuse formés sur le transporteur, et la distance entre deux tiges est de l'ordre de 2 à 3 fois la dimension moyenne de la matière non fibreuse 93.

A titre d'exemple non limitatif, le tambour peut avoir un diamètre de 180 mm environ ; la longueur des picots est de l'ordre de 10 à 30 mm. Leur espacement est par exemple de 40 mm pour le traitement du produit criblé à 20 mm.

Ces dimensions sont données à titre indicatif, la position du tambour par rapport à l'extrémité du transporter vibrant étant de plus déterminée pour que la matière tombe au bon endroit sur le tambour, l'objectif visé étant, comme indiqué précédemment, de laisser passer entre les picots la matière non fibreuse, qui est évacuée, par gravité et rebondissement sur la surface du tambour, du côté droit, tel que représenté sur la figure, la matière fibreuse étant évacuée du côté gauche, en dessous du transporteur vibrant 91. En plus de l'écartement des picots qui permet aux éléments durs de passer librement entre ceux-ci, la hauteur de chute, de l'ordre de 40 à 50 mm par exemple, a été déterminée de manière à assurer le rebond des petits éléments solides sur la surface du tambour et ainsi garantir leur éjection hors de la surface du tambour, à l'opposé du côté où sont évacuées les matières fibreuses.

Cette opération de séparation par la forme permet d'extraire les matières fibreuses et particulièrement les fibres issues de tissus déchiquetés et similaires.

Pour chaque fraction granulométrique, les matériaux non-fibreux en aval du tambour 94 sont soumis à une séparation magnéto-dynamique, connue en soi, typiquement réalisée par des séparateurs à courants de Foucault 10 permettant d'extraire les matériaux métalliques non magnétiques, tels que par exemple l'aluminium.

Les deux fractions granulométriques de plus petites dimensions (2 à 8, et 8 à 20 mm) sont optionnellement à nouveau soumis chacune séparément à une séparation par la forme 11, similaire à celle de l'étape 9, pour extraire encore les matières fibreuses restantes, puis à une séparation balistique 12 réalisée par un séparateur balistique de type connu, cette étape permettant d'assurer une séparation essentiellement par densité et d'extraire les produits tels que mousses de rembourrage ou bois.

En sortie de la séparation magnétodynamique 10, les produits de la fraction granulométrique plus grosse, sont traités par une séparation aéraulique 13 effectuée dans une colonne verticale à chicanes, de type connue en soi, par exemple de type ZIG-ZAG, permettant de séparer les éléments de matière plastique et également les mousses ou bois.

L'ensemble des étapes 9 à 13 permet d'assurer la séparation entre la fraction lourde contenue dans les résidus, composée de cuivre, d'inox et de plastiques en mélange et la fraction légère composées de mousses, de fibres végétales et organiques. La fraction légère est destinée à devenir un combustible de substitution pour la valorisation énergétique en cimenterie ou en installation de cogénération. Les différentes étapes de séparation aéro-densimétrique sont réalisées séparément sur les différentes classes granulométriques produites afin d'optimiser les performances de tri.

Les résidus issus de la séparation balistique 12 peuvent être traités directement en ligne, ou séparément, par une méthode de séparation par flottation en milieu dense 14, qui permet de séparer les matières plastiques de granulométrie inférieure à 20 mm des autres matériaux notamment métalliques non-ferreux tels que le cuivre. De tels procédés de séparation en milieu dense sont déjà généralement connus. On rappelle seulement ici que dans un tel procédé, les objets solides à séparer sont plongés dans un fluide dont la masse volumique est comprise entre celle des produits les plus lourds et celle des produits les plus légers. La séparation se fait suivant le principe de la poussée d'Archimède. Le milieu dense est constitué d'une suspension de fines particules magnétiques dans l'eau. La propriété magnétique de ce médium va permettre sa récupération facile par une séparation magnétique. La séparation dans le milieu dense précède une opération de lavage du produit pour se débarrasser de particules fines (inf. à 300 µm) qui polluent le milieu.

La fraction lourde triée par les procédés aéro-densimétriques est traitée par exemple dans une flottation en milieu aqueux activée par des vibrations dont l'objectif est d'obtenir la séparation des métaux non-ferreux, cuivre et inox, des mélanges de plastiques lourds et légers. Ces trois qualités de produits sont destinées à une valorisation matière. Si la qualité des flux de plastiques en mélange est trop hétérogène, chaque flux peut être réorienté vers une valorisation énergétique en installation de cogénération ou en cimenterie, comme combustible de substitution. Le flux de métaux non-ferreux sortant de la flottation peut être traité d'une manière complémentaire par un tri magnétique afin de séparer le cuivre des inox et morceaux de ferrite qui n'auraient pas été captés par les séparations magnétiques préalables.

Un système d'aspiration des poussières est connecté en chaque point de l'installation où la matière est remise en suspension par des vibrations ou le transport afin de capter les poussières les plus fines, d'éviter la pollution des flux par de la matière minérale, métallique ou organique pulvérulente ainsi que de préserver la santé des opérateurs de production.

Un système de prévention des incendies détecte les points chauds et étincelles et déclenche automatiquement l'extinction par aspersion d'eau brumisée sous pression. Ce système protège les composants de l'installation situés à la sortie immédiate des broyeurs et malaxeurs ainsi que le système d'aspiration des poussières.

Les matières triées sont réceptionnées dans des casiers. En fonction de la teneur résiduelle en poussière de la matière acheminée dans les casiers certains casiers sont équipés de buses de brumisation qui empêchent la dispersion des poussières éventuellement remises en suspension dans l'air. La consommation en eau des buses est régulée afin de maintenir les qualités des matériaux.

L'ensemble de la ligne est piloté par un système de commande centralisé relié à un ensemble de capteur permettant à l'opérateur de production de visualiser en temps réel les différentes phases du procédé.

## Revendications

1. Procédé de traitement de déchets, notamment des résidus de broyages légers, comportant des étapes de séparation et de criblage, ce procédé étant **caractérisé en ce qu'**il comprend également
- au moins un ensemble d'étapes de broyage et de criblage associés (61,62,7) pour séparer en fonction de leur granulométrie des éléments de matière comportant des matériaux durs, tels que produits minéraux, métalliques et des matières plastiques, et des matériaux de type fibreux et obtenir différentes fractions granulométriques desdits éléments de matière,
- une étape de transport séparé de chacune desdites fractions d'éléments de matière, et
- au moins une étape de séparation par la forme menée séparément sur chaque fraction de produit issue dudit ensemble d'étapes de broyage et criblage associés, l'étape de séparation par la forme étant menée, pour chaque fraction granulométrique traitée indépendamment, de manière que l'étape de transport séparé conduise à une formation d'agglomérats de matières fibreuses contenues dans chaque fraction, et de manière à extraire ensuite dans chacune desdites fractions, les matières de dimensions les plus grandes et les moins denses telles que lesdits agglomérats de matière fibreuse.

2. Procédé selon la revendication 1, **caractérisé en ce que** l'étape de séparation par la forme comporte l'utilisation d'un tambour à pointes (94) entraîné en rotation selon son axe disposé horizontalement et sur la surface cylindrique duquel les produits provenant du transporteur vibrant sont déversés dans une zone située sensiblement au-delà, horizontalement, de son axe par rapport au sens du flux de matière, la rotation du tambour étant à contresens dudit flux de matière déversé.

3. Procédé selon la revendication 1, **caractérisé en ce qu'**il comporte une étape préliminaire de désintégration par un broyeur à chocs.

4. Procédé selon la revendication 1, **caractérisé en ce que** le broyage de l'ensemble d'étapes de broyage et de criblage associés comporte un premier broyage (61) suivi immédiatement d'un second broyage (62) réalisé avec une énergie cinétique supérieure à celle du premier broyage.

5. Procédé selon la revendication 1, **caractérisé en ce que** l'ensemble d'étapes de broyage et de criblage associés est précédé d'une séparation aéraulique (5) réalisée sur les résidus issus d'un précriblage (3) permettant de séparer du flux de matière à traiter des fractions granulométriques de grande dimension ou de très petites dimensions.

6. Procédé selon la revendication 1, **caractérisé en ce que** les étapes suivantes sont réalisées après l'étape de séparation par la forme, sur chaque fraction granulométrique ou seulement sur certaines :
- séparation magnétodynamique (10) pour séparer les métaux non ferreux,
- nouvelle séparation par la forme (11) effectuée sur les fractions granulométriques de plus petite dimension, pour séparer à nouveaux les produit fibreux dégagés par l'évacuation des métalliques non ferreux,
- suivie d'une séparation balistique (12)individualisée par fraction granulométrique,
- séparation par flottation en milieu dense (14).

7. Procédé de traitement de déchets, notamment des résidus de broyages légers, comportant successivement les étapes suivantes :
- désintégration par un broyeur à chocs,
- séparation magnétique,
- premier criblage pour éliminer les résidus très fins et les gros résidus
- première séparation aéraulique pour extraction des pièces trop denses ou massives
- double broyage par passage successivement dans deux malaxeurs-broyeurs où la matière subit deux broyages successifs avec une énergie de broyage plus élevée dans le deuxième broyeur malaxeur que dans le premier,
- criblage en différentes factions granulométriques, chaque fraction étant ensuite traitée séparément par :
- séparation magnétique,
- séparation par la forme menée, pour chaque fraction granulométrique traitée indépendamment, de manière que l'étape de transport séparé conduise à agglomérer progressivement les matières fibreuses contenues dans chaque fraction et en séparer les autres matières, et de manière à extraire ensuite dans chacune desdites fractions, les matières de dimensions les plus grandes et les moins denses telles que lesdits agglomérats de matière fibreuse,
- les matériaux non-fibreux en aval de la séparation par la forme pouvant être soumis ensuite à d'autres étapes de séparation magnétique, séparation par la forme, séparation aéraulique, séparation en milieu dense.

8. Installation de traitement de déchets, notamment de résidus de broyage légers, comportant divers moyens de séparation, cette installation étant **caractérisée en ce qu'**elle comprend aussi
- au moins un ensemble de malaxeur-broyeur (61, 62) et de cribles (7) associés,
- des moyens de séparation par la forme (9) comportant des moyens de transport vibrants (91) séparés pour transporter séparément les différentes fractions granulo-métriques issues de l'ensemble de broyeur-malaxeur et de cribles associés.

9. Installation selon la revendication 8, **caractérisée en ce que** les moyens de séparation par la forme comportent aussi, associé à chaque moyen de transport vibrant (91), un tambour (94) comportant des picots fins et longs espacés, répartis sur la surface du tambour, chaque tambour étant entraîné en rotation selon son axe disposé horizontalement et étant situé en aval d'un des moyens de transport vibrant de manière que les produits provenant du transporteur vibrant soient déversés dans une zone du tambour située sensiblement au delà, horizontalement, de son axe par rapport au sens du flux de matière, et la rotation du tambour étant à contresens dudit flux de matière déversé.

10. Installation selon la revendication 8, **caractérisée en ce que** l'ensemble de malaxeur-broyeur (61, 62) et de cribles (7) associés comprend deux malaxeur-broyeur à axe vertical disposés successivement dans le sens du flux de résidus, le deuxième malaxeur-broyeur (62) étant à énergie cinétique supérieure à celle du premier (61).

11. Installation selon la revendication 8, **caractérisée en ce qu'**elle comprend, en premier poste de traitement, un broyeur à chocs pour effectuer une désintégration des matières.

12. Installation selon la revendication 8, **caractérisée en ce qu'**elle comprend aussi :
- un séparateur aéraulique (5) situé en amont de l'ensemble de malaxeur-broyeur et de cribles associés,
- un pré-crible (3) en amont du séparateur aéraulique,
- un séparateur magnétique (2) en amont du précrible.

13. Installation selon la revendication 8, **caractérisée en ce qu'**elle comprend aussi, en aval de chacun ou de certains des séparateurs par la forme, un ou plusieurs des éléments suivants :
- un séparateur magnétodynamique (10)
- un séparateur par la forme secondaire (11),
- un séparateur balistique (12),
- un séparateur aéraulique secondaire (13),
- un séparateur par flottation en milieu dense (14) .
